# EUROPEAN PATENT APPLICATION

(11) **EP 4 207 666 A1**
(43) Date of publication of application: **05.07.2023**
(21) Application number: 23150046.3
(22) Date of filing: 02.01.2023
(51) Int. Cl.: H04L 5/00

(54) **CONFIGURATION OF PDCCH MONITORING OCCASIONS FOR MULTI-SLOT PDCCH MONITORING CAPABILITY**

(30) Priority: 03.01.2022 US 202263296049 P; 28.02.2022 US 202263314888 P
(71) Applicant: INTEL Corporation, Santa Clara, CA 95054 (US)
(72) Inventor: XIONG, Gang, Portland, 97229 (US); LEE, Dae Won, Portland, 97229 (US); LI, Yingyang, Beijing, 100032 (CN); WANG, Yi, Beijing, 10000 (CN)
(74) Representative: Viering, Jentschura & Partner mbB Patent- und Rechtsanwälte

(57) **Abstract**

An apparatus of a New Radio (NR) User Equipment (LTE) is provided, the apparatus including: a radio frequency (RF) interface; and one or more processors coupled to the RF interface and configured to: receive a high layer configuration on a plurality of search space (SS) sets; configure timing for a physical downlink control channel (PDCCH) monitoring according to the plurality of SS sets; and decode a downlink control information (DCI) from PDCCH using the PDCCH monitoring.

## Description

### TECHNICAL FIELD

Various embodiments generally may relate to the field of wireless communications.

### BACKGROUND

Mobile communication has evolved significantly from early voice systems to today's highly sophisticated integrated communication platform. The next generation wireless communication system, 5G, or new radio (NR) will provide access to information and sharing of data anywhere, anytime by various users and applications. NR is expected to be a unified network/system that target to meet vastly different and sometime conflicting performance dimensions and services. Such diverse multi-dimensional requirements are driven by different services and applications. In general, NR will evolve based on 3GPP LTE-Advanced with additional potential new Radio Access Technologies (RATs) to enrich people lives with better, simple and seamless wireless connectivity solutions. NR will enable everything connected by wireless and deliver fast, rich contents and services.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 exemplarily illustrates a slot duration for a subcarrier spacing of 960kHz;
FIG. 2 illustrates one example for the multi-slot PDCCH monitoring capability with combination (4, 1);
FIG. 3 illustrates one example of only counting the actually monitored spans in a slot group;
FIG. 4 illustrates one example to reduce the total number of spans if different SS sets can be covered in same span;
FIG. 5 illustrates one example to ensure the maximum number of spans in any slot group by gNB configuration;
FIG. 6 illustrates another example to ensure the maximum number of spans in any slot group by gNB configuration;
FIG. 7 illustrates one example of dropping a span of the first group of SS sets to meet a maximum number of 3 spans in a slot group;
FIG. 8 illustrates one example of dropping a span of the first group of SS sets to avoid spans in consecutive slots in a slot group;
FIG. 9 illustrates one example of dropping spans in consecutive slots across slot groups;
FIG. 10 illustrates a network in accordance with various embodiments;
FIG. 11 schematically illustrates a wireless network in accordance with various embodiments;
FIG. 12 is a block diagram illustrating components

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

Mobile communication has evolved significantly from early voice systems to today's highly sophisticated integrated communication platform. The next generation wireless communication system, 5G, or new radio (NR) will provide access to information and sharing of data anywhere, anytime by various users and applications. NR is expected to be a unified network/system that target to meet vastly different and sometime conflicting performance dimensions and services. Such diverse multi-dimensional requirements are driven by different services and applications. In general, NR will evolve based on 3GPP LTE-Advanced with additional potential new Radio Access Technologies (RATs) to enrich people lives with better, simple and seamless wireless connectivity solutions. NR will enable everything connected by wireless and deliver fast, rich contents and services.

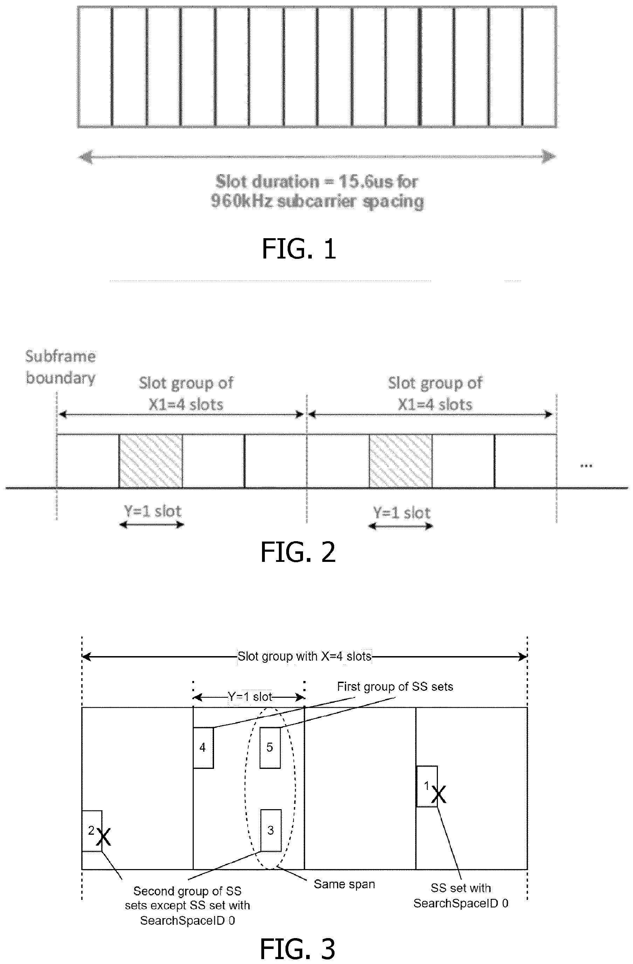

FIG. 1 exemplarily illustrates a slot duration for a subcarrier spacing of 960kHz. As defined in NR, one slot has 14 symbols. For system operating above 52.6GHz carrier frequency, if larger subcarrier spacing (SCS), e.g., 960kHz is employed, the slot duration can be very short. For instance, for SCS 960kHz, one slot duration is approximately 15.6µs, as also shown in FIG. 1.

In NR, a control resource set (CORESET) is a set of time/frequency resources carrying Physical Downlink Control Channel (PDCCH) transmissions. The CORESET is divided into multiple control channel element (CCE). A physical downlink control channel (PDCCH) candidate with aggregation level (AL) L consists of L CCEs. L could be 1, 2, 4, 8, 16. A search space set can be configured to a UE, which configures the timing for PDCCH monitoring and a set of CCEs carrying PDCCH candidates for the user equipment (LTE).

In NR Rel-15, the maximum number of monitored PDCCH candidates and non-overlapped CCEs for PDCCH monitoring in a slot are specified for the UE. When the subcarrier spacing is increased from 15kHz to 120kHz, maximum number of blind detections (BDs) and CCEs for PDCCH monitoring in a slot is reduced substantially. This is primarily due to user equipment (UE) processing capability with short symbol and slot duration. For system operating between 52.6GHz and 71GHz carrier frequency, when a large subcarrier spacing is introduced, the slot becomes quite short. Consequently, it is not desired to force UE to monitor PDCCH in every slot due to concern on power consumption and complexity at LTE side. Further, if the maximum numbers of monitored PDCCH candidates and non-overlapped CCEs per slot is reduced substantially, it causes limitation on next generation NodeB (gNB) scheduling flexibility. As a solution to overcome the above drawbacks, multi-slot PDCCH monitoring capability is introduced.

Various embodiments herein provide techniques to configure the spans of different search space sets in a slot group for multi-slot PDCCH monitoring capability. Embodiments may be used, e.g., in a system operating above 52.6GHz carrier frequency.

The multi-slot PDCCH monitoring capability is defined in a group of X consecutive slots. The slot groups are consecutive and non-overlapping. The start of the first slot group in a subframe is aligned with the subframe boundary. A first group of search space (SS) sets are monitored within Y consecutive slots within a slot group. The location of the Y slots within a slot group is maintained across different slot groups. The first group of SS sets may include a LTE specific SS (USS) set, a Type3 common search space (CSS) set and/or a Type 1 CSS set with dedicated radio resource control (RRC) configuration. For all the other SS sets, which belong to the second group of SS sets, are not restricted to the Y slots. For example, X can be 4 or 8 for SCS 480 or 960kHz, which has same duration as a slot of SCS 120kHz. A typical value of Y is 1 which is good for power saving at LTE. A lager Y is supported too. The multi-slot PDCCH monitoring capability can be expressed as a combination (X, Y).

FIG. 2 illustrates one example for the multi-slot PDCCH monitoring capability with combination (4, 1) ((X=4, Y=1)). LTE only monitors the first group of SS sets in the Y=1 slot in every X-slot group.

### Span for the second group of SS sets

For the case Y=1 for the multi-slot PDCCH monitoring capability combination (X, Y), the first group of SS sets can be monitored in up to M spans of n consecutive orthogonal frequency division multiplexing (OFDM) symbols in the Y=1 slot in the slot group of X slots. M, n can be predefined, e.g., M=2, n=3. For example, the distance of the first symbol of the two spans is at least 7 symbols for SCS 960kHz, and the distance of the first symbol of the two spans is at least 4 symbols for SCS 480kHz. For the case Y>1 for the multi-slot PDCCH monitoring capability combination (X, Y), the first group of SS sets can be monitored only in the first n OFDM symbols of each of the Y slots in the slot group of X slots.

The second group of SS sets can be in any slot in a slot group of X slots. That is, it may not be limited to the Y=1 slot or Y>1 slots as the first group of SS sets. The slot and symbol position, e.g., the PDCCH monitoring occasions (MOs) of the SS set with *searchSpaceld* = 0 is dependent on the associated synchronization signal/physical broadcast channel (SS/PBCH) block. The PDCCH measurement objects (Mos) of other SS sets in the second group of SS sets can be configured by high layer signaling. A full flexibility on the PDCCH MOs in any symbol in the X-slot group may not be necessary since it complicates the gNB/UE implementation.

In the following embodiment, the restriction on the number of spans in a slot may be separately applied to each CSS type of the second group of SS sets. Alternatively, the restriction on the number of spans in a slot may be jointly applied to all the second group of SS sets. Alternatively, the restriction on the number of spans in a slot is applied to Type0A/2 CSS with *searchSpaceId ≠* 0, while it is limited to up to one span in a slot for Type1 CSS without dedicated RRC configuration. Alternatively, the restriction on the number of spans in a slot is jointly applied to all second group of SS sets, while it is limited to up to one span in a slot for each CSS type among Type1 CSS without dedicated RRC configuration and Type0A/2 CSS. Alternatively, it is limited to up to one span in a slot considering all the second group of SS sets. Alternatively, it is limited to up to one span in a slot for each CSS type in the second group of SS sets.

In the following embodiment, the restriction on the number of spans in a slot group may be separately applied to each CSS type of the second group of SS sets. Alternatively, the restriction on the number of spans in a slot group may be jointly applied to all second group of SS sets. Alternatively, the restriction on the number of spans in a slot group is applied to Type1 CSS without dedicated radio resource control (RRC) configuration, while there can be no limitation for the Type0A/2 CSS with *searchSpaceId ≠* 0. For example, there can be at most one span in a slot group that is configured with Type1 CSS without dedicated RRC configuration, the limitation on the number of spans in a slot group is effectively the limitation of at most one slot that is configured with Type1 CSS without dedicated RRC configuration.

In one embodiment, in multi-slot PDCCH monitoring, the maximum number and position of the spans for the two groups of SS sets in a slot in a slot group of X slots should be limited. If a span for the second group of SS sets is configured in a slot in the slot group, the total number of spans in the slot is still limited to M. Here the total number includes the number of spans for any SS sets in the slot. Alternatively, the maximum number of spans in the slot can be increased to more than M. There may be a further limitation on distance between the first symbol of the M spans in the slot, e.g., the minimum distance can be 4 or 7 OFDM symbols. Alternatively, if a span for the second group of SS sets is configured in a slot in the slot group, it must be configured within the first n OFDM symbols in a slot.

In one embodiment, in multi-slot PDCCH monitoring, the maximum number and position of the spans for the second group of SS sets in a slot group of X slots should be predefined.

In one option, the second group of SS sets can be configured in at most one span of n consecutive symbols in a slot group. Alternatively, the second group of SS sets except the SS set with *searchSpaceld =* 0 can be configured in at most one span of n consecutive symbols in a slot group. The span within a slot group may be limited to the first n OFDM symbols in a slot. Alternatively, the span can be in symbols other than the first n OFDM symbols in a slot. The location of the span within a slot group is maintained across different slot groups. Alternatively, the location of the span within a slot group can be different in different slot groups. The span must include the PDCCH MO of the SS set with *searchSpaceld* = 0 if SS set with *searchSpaceld* = 0 is present in the slot group. Alternatively, the span may not include the PDCCH MO of the SS set with *searchSpaceld* = 0 if SS set with *searchSpaceld* = 0 is present in the slot group. It may be not necessary for LTE to monitor the second group of SS sets in every slot group. For example, the UE may selectively monitor a PDCCH MO of a Type0A/2 CSS set with *searchSpaceId* non-zero.

In another option, the second group of SS sets can be configured in at most two spans each of n consecutive symbols in a slot group. Alternatively, the second group of SS sets except the SS set with *searchSpaceld =* 0 can be configured in at most two spans each of n consecutive symbols in a slot group. The two spans within a slot group may be limited to the first n OFDM symbols in a slot. Alternatively, the two spans can be in symbols other than the first n OFDM symbols in a slot. The location of the two spans within a slot group is maintained across different slot groups. Alternatively, the location of the two spans within a slot group can be different in different slot groups. The two spans must include the PDCCH MO of the SS set with *searchSpaceld* = 0 if SS set with *searchSpaceld* = 0 is present in the slot group. Alternatively, the two spans may not include the PDCCH MO of the SS set with *searchSpaceld* = 0 if SS set with *searchSpaceld* = 0 is present in the slot group. The two spans must in the same slot. Alternatively, the two spans can be in different slots in the slot group. It may be not necessary for LTE to monitor the second group of SS sets in every slot group or in both two spans in a slot group.

In another option, the second group of SS sets can be configured in at most P spans each of n consecutive symbols in a slot group. Alternatively, the second group of SS sets except the SS set with *searchSpaceld =* 0 can be configured in at most P spans each of n consecutive symbols in a slot group. P is a value larger than 2. The P spans within a slot group may be limited to the first n OFDM symbols in a slot. Alternatively, the P spans can be in symbols other than the first n OFDM symbols in a slot. The location of the P spans within a slot group is maintained across different slot groups. Alternatively, the location of the P spans within a slot group can be different in different slot groups. The P spans must include the PDCCH MO of the SS set with *searchSpaceld* = 0 if SS set with *searchSpaceld* = 0 is present in the slot group. Alternatively, the P spans may not include the PDCCH MO of the SS set with *searchSpaceld* = 0 if SS set with *searchSpaceld* = 0 is present in the slot group. The P spans must in the same slot. Alternatively, the P spans can be in different slots in the slot group. It may be not necessary for LTE to monitor the second group of SS sets in every slot group or in all the M spans in a slot group.

### Maximum number of spans in a slot group

The spans in a slot group for the LTE can be categorized as 1) the span carrying the SS set with *searchSpaceld =* 0; 2) the one or more spans carrying the second group of SS sets except the SS set with *searchSpaceld =* 0; and 3) the one or more spans carrying the first group of SS sets. Note: two or multiple above spans may be covered by a single span of n OFDM symbols. In multi-slot PDCCH monitoring, it can be beneficial to limit the maximum number of spans in a slot group of X slots for a LTE. Specifically, the maximum number of spans in a slot group of X slots can be limited to no more than k. k can be configured by high layer signaling, or predefined, or reported by LTE as a parameter of LTE capability. For example, k could be 2, 3, 4 or 5.

A span for the second group of SS sets may need to be monitored by LTE only in certain condition. For example, the LTE may selectively monitor a PDCCH MO of a Type0A/2 CSS set with *searchSpaceId* non-zero. If a span for the second group of SS sets is not monitored by LTE in a slot group, the span may not be counted in the total number of monitored spans in a slot group. Specifically, if Type0A/2 CSS sets are configured with *searchSpaceID* non-zero, the MOs of Type0A/2 CSS sets are sequentially numbered and mapped to the actual transmitted SSBs according to *ssb-PositionsInBurst* in *System Information Block Type 1 (SIB1),* where the actual transmitted SSBs are sequentially numbered in ascending order of their SSB indexes. That is, the [x×N+K]^{th} PDCCH MO(s) of Type0A/2 CSS sets corresponds to the K^{th} transmitted SSB, where x = 0, 1, ...X-1, K = 1, 2, ...N. LTE may only monitor a MO that is associated with a SSB for Type0A/2 CSS sets configured with *searchSpaceID* non-zero. For example, if there exists a span only for Type 1 CSS sets with dedicated RRC configuration LTE in a slot group, and if the span is not monitored by LTE in the slot group, the span may be not counted in the total number of monitored spans in a slot group. By this way, the unnecessary drop of a span can be mitigated.

FIG. 3 illustrates one example of only counting the actually monitored spans in a slot group. assuming a maximum number of 2 spans in a slot group, if the span 1 for SS set with *searchSpaceld =* 0 and span 2 for the second group of SS sets except the SS set with *searchSpaceld* = 0 are not monitored in the slot group, the remaining monitored spans in the slot group is 2, therefore dropping span is not needed. A span of the second group of SS sets is not counted.

In one embodiment, the above different spans may be configured in overlapped symbols or adjacent symbols which are covered by a single span of n OFDM symbols. in other words, different kinds of SS sets can be configured in the same span. Consequently, the number of spans in a slot group can be reduced.

In one option, a span of the first group of SS sets and a span of the second group of SS sets may be configured in overlapped symbols or adjacent symbols, to be covered by a single span of n OFDM symbols.

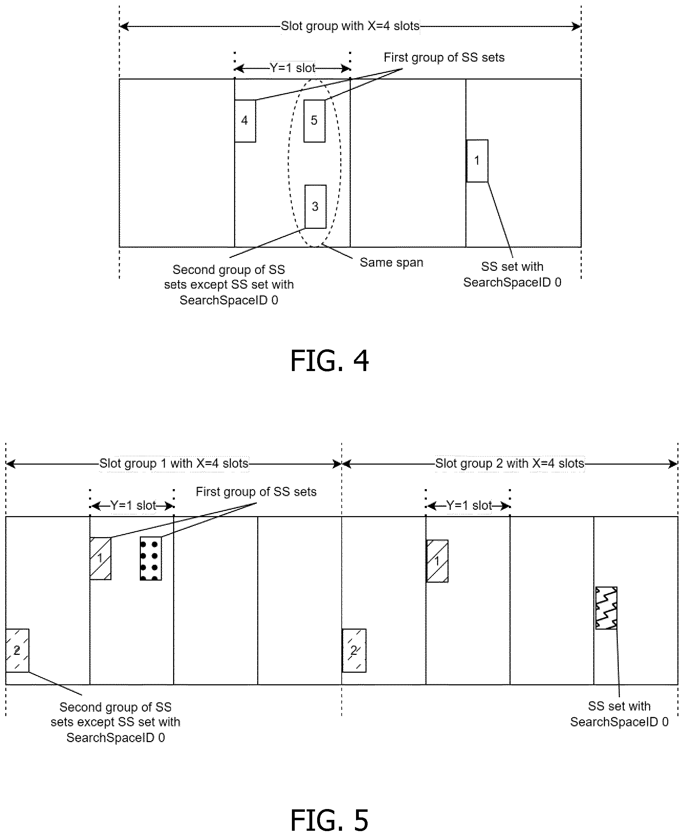

FIG. 4 illustrates one example to reduce the total number of spans if different SS sets can be covered in same span. Overlapped spans for the two groups of SS sets. It assumes the span 4 for the first group of SS sets and the span 2 for the second group of SS sets except the SS set with *searchSpaceld =* 0 can be covered by a single span of 3 consecutive symbols, therefore, the number of spans in the slot group is reduced to 3.

In another option, a span of the SS set with *searchSpaceld =* 0 and a span of the second group of SS sets except the SS set with *searchSpaceld =* 0 may be configured in overlapped symbols or adjacent symbols, to be covered by a single span of n OFDM symbols.

In another option, gNB may ensure the configuration of the spans of the different SS sets so that the total number of spans in any slot group does not exceed a maximum number.

FIG. 5 illustrates one example to ensure the maximum number of spans in any slot group by gNB configuration. It assumes up to 2 spans in a slot in a slot group can be configured for the first group of SS sets. In the slot group where the span for SS set with *searchSpaceld =* 0 is present, gNB may only configure the first group of SS sets in single span. By this way, the maximum number of spans in a slot group is limited to 3.

FIG. 5. Reduce the total number of spans in a slot group by gNB configuration

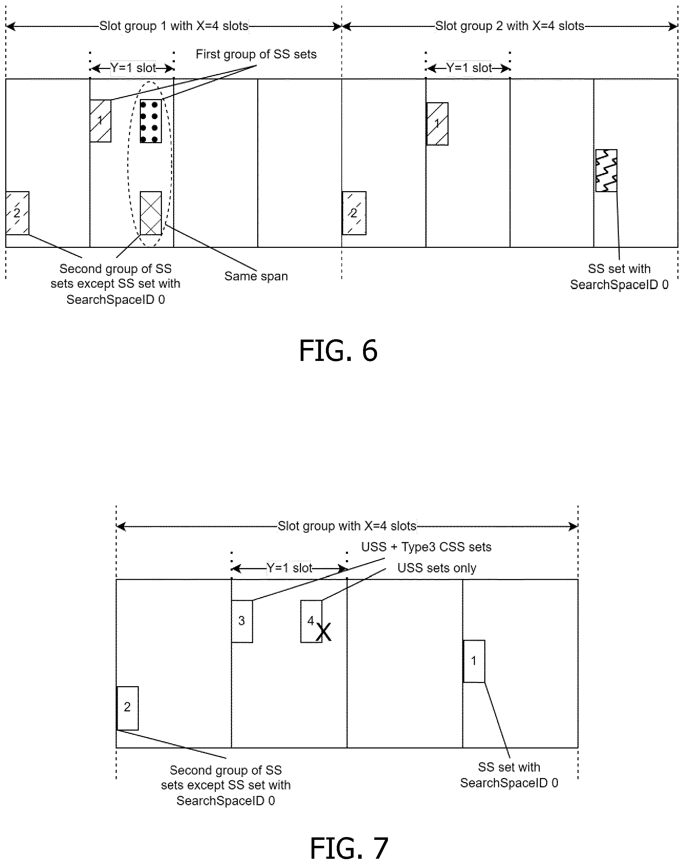

FIG. 6 illustrates another example to ensure the maximum number of spans in any slot group by gNB configuration. It assumes that up to 2 spans in a slot in a slot group can be configured for the first group of SS sets. In slot group 2 where the span for SS set with *searchSpaceld* = 0 is present, gNB may only configure the first group of SS sets in single span and only configure one span for the second group of SS sets except the SS set with *searchSpaceld =* 0. Further, it assumes that up to 2 spans in a slot group can be configured for the second group of SS sets except the SS set with *searchSpaceld* = 0. A span for the first group of SS sets and a span for the second group of SS sets except the SS set with *searchSpaceld =* 0 can be covered by a single span of 3 consecutive symbols. By this way, the maximum number of spans in slot group 1 is limited to 3 too.

*FIG. 6**. Reduce the total number of spans in a slot group by gNB configuration*

In one embodiment, if one or multiple types of CSSs from Type1 CSS without dedicated RRC configuration and/or Type0/0A/2 CSS are configured in a slot group, the LTE can monitor at most M spans of one CSS type of the CSS types. M is predefined or configured by high layer signaling, e.g., M=1. The LTE may only monitor the other CSS types if they are configured in the same span(s) as the one CSS type. A fixed priority rule may be predefined to determine the above one CSS type. For example, the priority is decreased in the order of TypeO, TypeOA, Type2, Type1. Alternatively, the prioritized type of CSS is determined according to the LTE state. For example, if LTE needs to monitor paging information, Type2 CSS is prioritized; If LTE needs to monitor other system information, TypeOA CSS is prioritized; if LTE needs to receive system information block-1 (SIB1), Type0 CSS is prioritized.

In one option, if LTE would detect Type0 CSS in a span in a slot group, the LTE only monitor the Type1 CSS without dedicated RRC configuration or the Type0A/2 CSS if it is configured in the same span. In another option, if LTE would detect TypeOA CSS in a span in a slot group, the UE only monitor the Type1 CSS without dedicated RRC configuration or the Type0/2 CSS if it is configured in the same span. In another option, if LTE would detect Type2 CSS in a span in a slot group, the LTE only monitor the Type1 CSS without dedicated RRC configuration or the Type0/0A CSS if it is configured in the same span. In another option, if UE would detect Type1 CSS without dedicated RRC configuration in a span in a slot group, the LTE only monitor the Type0/0A/2 CSS if it is configured in the same span.

In one embodiment, if one or multiple types of CSSs from Type1 CSS without dedicated RRC configuration and/or Type0/0A/2 CSS are configured in a slot group, the LTE can monitor at most M MOs of one CSS type of the CSS types. M is predefined or configured by high layer signaling, e.g., M=1. The LTE may only monitor the other CSS types if they are configured in the same MO(s) as the one CSS type. A fixed priority rule may be predefined to determine the above one CSS type. For example, the priority is decreased in the order of TypeO, TypeOA, Type2, Type1. Alternatively, the prioritized type of CSS is determined according to the LTE state. For example, if LTE needs to monitor paging information, Type2 CSS is prioritized; If LTE needs to monitor other system information, TypeOA CSS is prioritized; if LTE needs to receive SIB1, Type0 CSS is prioritized.

In one option, if LTE would detect Type0 CSS in a MO in a slot group, the LTE only monitor the Type1 CSS without dedicated RRC configuration or the Type0A/2 CSS if it is configured in the same MO. In another option, if UE would detect TypeOA CSS in a MO in a slot group, the UE only monitor the Type1 CSS without dedicated RRC configuration or the Type0/2 CSS if it is configured in the same MO. In another option, if LTE would detect Type2 CSS in a MO in a slot group, the LTE only monitor the Type1 CSS without dedicated RRC configuration or the Type0/0A CSS if it is configured in the same MO. In another option, if LTE would detect Type1 CSS without dedicated RRC configuration in a MO in a slot group, the LTE only monitor the Type0/0A/2 CSS if it is configured in the same MO.

In one embodiment, if multiple types of CSS from Type1 CSS without dedicated RRC configuration and/or Type0/0A/2 CSS are configured in a slot group, the UE can monitor only one CSS type of the multiple types of CSS. The other CSS types can be dropped. A fixed priority rule may be predefined. For example, the priority is decreased in the order of TypeO, TypeOA, Type2, Type1. Alternatively, the prioritized type of CSS is determined according to the LTE state. For example, if LTE needs to monitoring paging information, Type2 CSS is prioritized; If UE needs to monitoring other system information, TypeOA CSS is prioritized; if LTE needs to receive SIB 1, Type0 CSS is prioritized. The maximum number of spans or MOs for the prioritized CSS type that are monitored by the LTE can be further limited.

In one embodiment, in multi-slot PDCCH monitoring, if the total number of spans in a slot group of X slots for a LTE exceed a maximum number k, one or more spans in the slot group can be dropped so that the maximum number is not exceeded. k can be configured by high layer signaling, or predefined, or reported by UE as a parameter of LTE capability. For example, k could be 2, 3, 4 or 5.

In one option, if maximum number k is exceeded for a slot group, one or more spans with USS sets only in the slot group can be dropped. gNB guarantees the total number of spans of other SS sets doesn't exceed the maximum number k in a slot group. To drop a span with USS sets only in the slot group, LTE may drop a span which is not in the first n OFDM symbols in a slot. Alternatively, LTE may drop the last span(s) in the slot group with USS sets only.

FIG. 7 illustrates one example of dropping a span of the first group of SS sets to meet a maximum number of 3 spans in a slot group. Among the two spans of the first group of SS sets, the span 4 with USS set only is dropped.

*Figure 7**. Dropping a* span *with USS sets only*

In another option, if maximum number k is exceeded for a slot group, one or more spans of the first group of SS sets in the slot group is dropped. gNB guarantees the total number of spans for the second group of SS sets doesn't exceed the maximum number k in a slot group. It is prioritized to drop a span with USS sets only. Otherwise, LTE may drop a span which is not in the first n OFDM symbols in a slot. Alternatively, UE may drop a span in a latter timing in the slot group.

In another option, if maximum number k is exceeded for a slot group, one or more spans of the first group of SS sets in the slot group is dropped firstly. If the remaining number of spans still exceed the maximum number k, one or more spans with the second group of SS sets except the SS set with *searchSpaceld =* 0 can be dropped.

In another option, if maximum number k is exceeded for a slot group, one or more spans of the first group of SS sets in the slot group is dropped firstly. If the remaining number of spans still exceed the maximum number k, the span of the SS set with *searchSpaceld =* 0 can be dropped.

In one embodiment, in multi-slot PDCCH monitoring, a span in a slot group may need to be dropped if at least two spans are configured in consecutive slots in a slot group or across two consecutive slot groups for a LTE. Further, the total number of spans in a slot group of X slots for the LTE should not exceed a maximum number k. k can be configured by high layer signaling, or predefined, or reported by LTE as a parameter of LTE capability. One or more spans can be dropped until the above two limitations are avoided. It is prioritized to drop a span in a consecutive slot from a slot containing another span.

In one option, one or more spans with USS sets only in a slot group can be dropped. gNB guarantees the remaining spans of other SS sets doesn't violate the above two limitations. To drop a span with USS sets only in the slot group, UE may firstly drop a span if it is in a consecutive slot from a slot containing another span. Then, LTE may drop a span which is not in the first n OFDM symbols in a slot. Alternatively, LTE may drop a span in a latter timing in the slot group.

In one option, one or more spans of the first group of SS sets in a slot group is dropped. gNB guarantees the remaining spans for the second group of SS sets doesn't violate the above two limitations. It is prioritized to drop a span in a consecutive slot from a slot containing another span. LTE may firstly drop a span with only USS sets if it is in a consecutive slot from a slot containing another span. Then, LTE may drop a span which is not in the first n OFDM symbols in a slot. Alternatively, UE may drop a span in a latter timing in the slot group.

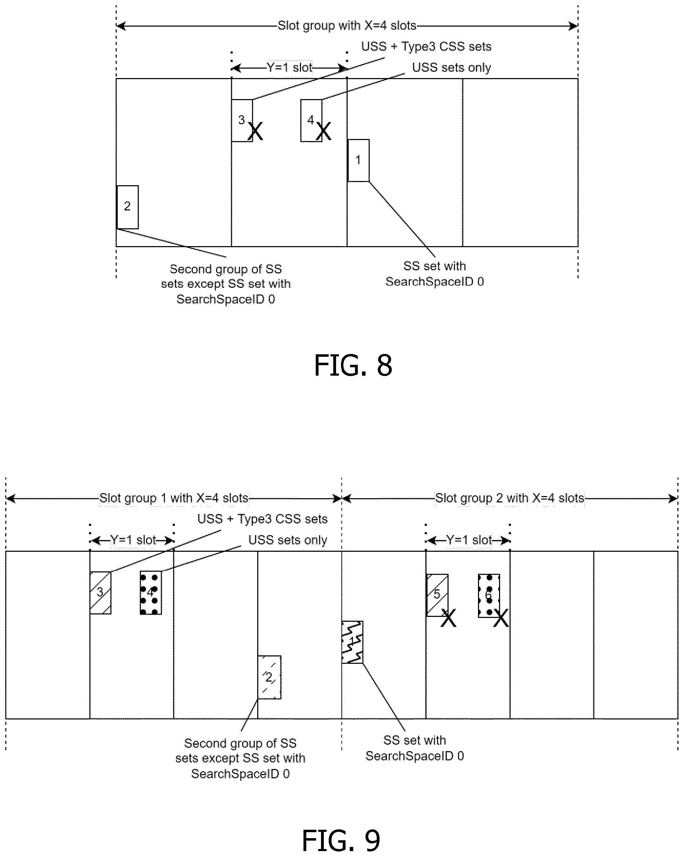

FIG. 8 illustrates one example of dropping a span of the first group of SS sets to avoid spans in consecutive slots in a slot group. Both span 3 & 4 the first group of SS sets have to be dropped since they are configured in same slot which is preceding the slot with the SS set with *searchSpaceld =* 0.

FIG. 8. Dropping both spans of the first group of SS sets

In another option, for the multiple spans that are configured in consecutive slots, LTE may firstly drop a span with only USS sets, then other span(s) with the first group of SS sets. If there are still span(s) in consecutive slots, a span of the second group of SS sets except the SS set with *searchSpaceld =* 0 can be dropped. If the remaining number of spans exceeds the maximum number k, a span can be dropped until the maximum number is not exceeded.

FIG. 9 illustrates one example of dropping spans in consecutive slots across slot groups. The span 2 for the second group of SS sets except the SS set with *searchSpaceld =* 0 has to be dropped since it is in consecutive slot from the slot carrying the SS sets with *searchSpaceld* = 0 in the next slot group. Further, both span 5 & 6 the first group of SS sets have to be dropped since they are configured in same slot and is next to the slot with the SS set with *searchSpaceld =* 0 in slot group 2.

*FIG. 9**. Dropping a span due to spans in consecutive slots across slot group*

In another option, for the multiple spans that are configured in consecutive slots, LTE may firstly drop a span with only USS sets, then other span(s) with the first group of SS sets. If there are still span(s) in consecutive slots, a span of the SS set with *searchSpaceld =* 0 can be dropped. If there are still span(s) in consecutive slots, a span of the second group of SS sets except the SS set with *searchSpaceld =* 0 can be dropped. If the remaining number of spans exceed the maximum number k, a span can be dropped until the maximum number is not exceeded.

In one embodiment, assuming a maximum number k of spans in a slot group of X slots can be monitored for combination (X, Y) with Y=1, a separate maximum number k1 of spans in a slot group of X slots for combination (X, Y) with Y>1 can be configured by high layer, or predefined, or reported by LTE as a parameter of UE capability. k1 can be smaller than, equal to or larger than k. Alternatively, k1 for combination (X, Y) with Y>1 can equal to value Y.

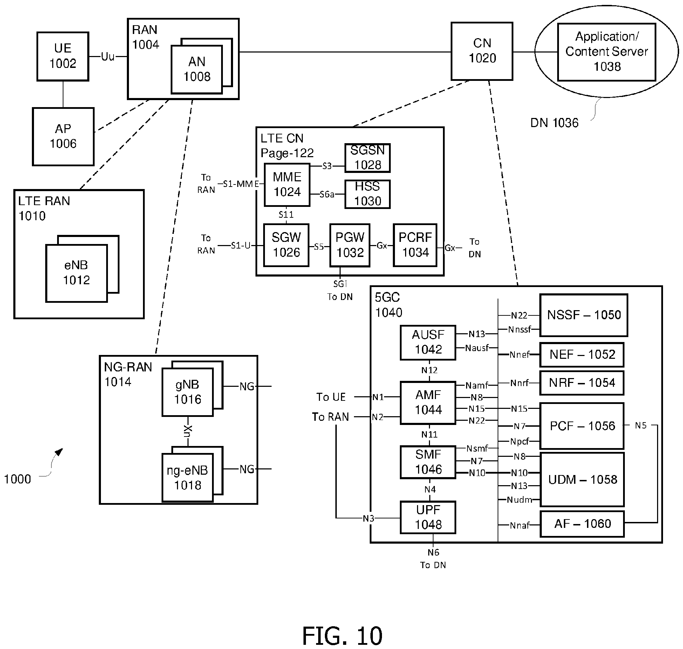

Figures 10-YY illustrate various systems, devices, and components that may implement aspects of disclosed embodiments.

FIG. 10 illustrates a network 1000 in accordance with various embodiments. The network 1000 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 1000 may include a LTE 1002, which may include any mobile or non-mobile computing device designed to communicate with a radio access network (RAN) 1004 via an over-the-air connection. The LTE 1002 may be communicatively coupled with the RAN 1004 by a Uu interface. The LTE 1002 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M) or device-to-device (D2D) device, internet of things (IoT) device, etc.

In some embodiments, the network 1000 may include a plurality of LTEs coupled directly with one another via a sidelink interface. The LTEs may be M2M/D2D devices that communicate using physical sidelink channels such as, but not limited to, physical sidelink broadcast channel (PSBCH), physical sidelink downlink channel (PSDCH), physical sidelink shared channel (PSSCH), physical sidelink control channel (PSCCH), physical sidelink feedback channel (PSFCH), etc.

In some embodiments, the LTE 1002 may additionally communicate with an AP 1006 via an over-the-air connection. The AP 1006 may manage a wireless local area network (WLAN) connection, which may serve to offload some/all network traffic from the RAN 1004. The connection between the LTE 1002 and the access point (AP) 1006 may be consistent with any IEEE 802.11 protocol, wherein the AP 1006 could be a wireless fidelity (Wi-Fi^{®}) router. In some embodiments, the LTE 1002, RAN 1004, and AP 1006 may utilize cellular-WLAN aggregation (for example, LTE-WAN aggregation (LWA)/ LTE/WLAN Radio Level Integration with IPsec Tunnel (LWIP)). Cellular-WLAN aggregation may involve the LTE 1002 being configured by the RAN 1004 to utilize both cellular radio resources and WLAN resources.

The RAN 1004 may include one or more access nodes (ANs), for example, AN 1008. AN 1008 may terminate air-interface protocols for the LTE 1002 by providing access stratum protocols including RRC, packet data convergence protocol (PDCP), radio link control (RLC), medium access control (MAC), and layer-1 (L1) protocols. In this manner, the AN 1008 may enable data/voice connectivity between core network (CN) 1020 and the LTE 1002. In some embodiments, the AN 1008 may be implemented in a discrete device or as one or more software entities running on server computers as part of, for example, a virtual network, which may be referred to as a cloud radio access network (CRAN) or virtual baseband unit pool. The AN 1008 be referred to as a base station (BS), gNB, RAN node, eNB, ng-eNB, NodeB, road side unit (RSU), transmission reception point (TRxP, TRP), etc. The AN 1008 may be a macrocell base station or a low power base station for providing femtocells, picocells or other like cells having smaller coverage areas, smaller user capacity, or higher bandwidth compared to macrocells.

In embodiments in which the RAN 1004 includes a plurality of ANs, they may be coupled with one another via an X2 interface (if the RAN 1004 is an LTE RAN) or an Xn interface (if the RAN 1004 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 1004 may each manage one or more cells, cell groups, component carriers, etc. to provide the LTE 1002 with an air interface for network access. The LTE 1002 may be simultaneously connected with a plurality of cells provided by the same or different ANs of the RAN 1004. For example, the LTE 1002 and RAN 1004 may use carrier aggregation to allow the LTE 1002 to connect with a plurality of component carriers, each corresponding to a primary cell (Pcell) or secondary cell (Scell). In dual connectivity scenarios, a first AN may be a master node that provides a master cell group (MCG) and a second AN may be secondary node that provides a secondary cell group (SCG). The first/second ANs may be any combination of eNB, gNB, ng-eNB, etc.

The RAN 1004 may provide the air interface over a licensed spectrum or an unlicensed spectrum. To operate in the unlicensed spectrum, the nodes may use licensed assisted access (LAA), enhanced LAA (eLAA), and/or further enhanced LAA (feLAA) mechanisms based on carrier aggregation (CA) technology with PCells/Scells. Prior to accessing the unlicensed spectrum, the nodes may perform medium/carrier-sensing operations based on, for example, a listen-before-talk (LBT) protocol.

In vehicle to everything (V2X) scenarios the LTE 1002 or AN 1008 may be or act as a RSU, which may refer to any transportation infrastructure entity used for V2X communications. An RSU may be implemented in or by a suitable AN or a stationary (or relatively stationary) LTE. An RSU implemented in or by: a LTE may be referred to as a "LTE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle LTEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 1004 may be an LTE RAN 1010 with eNBs, for example, eNB 1012. The LTE RAN 1010 may provide an LTE air interface with the following characteristics: SCS of 15 kHz; cyclic-prefix-OFDM (CP-OFDM) waveform for downlink (DL) and single carrier-frequency division multiple access (SC-FDMA) waveform for uplink (UL); turbo codes for data and TBCC for control; etc. The LTE air interface may rely on channel state information-reference signal (CSI-RS) for CSI acquisition and beam management; physical downlink shared channel (PDSCH)/PDCCH demodulation reference signal (DMRS) for PDSCH/PDCCH demodulation; and cell specific reference signal (CRS) for cell search and initial acquisition, channel quality measurements, and channel estimation for coherent demodulation/detection at the LTE. The LTE air interface may operating on sub-6 GHz bands.

In some embodiments, the RAN 1004 may be an NG-RAN 1014 with gNBs, for example, gNB 1016, or ng-eNBs, for example, ng-eNB 1018. The gNB 1016 may connect with 5G-enabled LTEs using a 5G NR interface. The gNB 1016 may connect with a 5G core through an NG interface, which may include an N2 interface or an N3 interface. The ng-eNB 1018 may also connect with the 5G core through an NG interface, but may connect with a LTE via an LTE air interface. The gNB 1016 and the ng-eNB 1018 may connect with each other over an Xn interface.

In some embodiments, the NG interface may be split into two parts, an NG user plane (NG-U) interface, which carries traffic data between the nodes of the NG-RAN 1014 and a UPF 1048 (e.g., N3 interface), and an NG control plane (NG-C) interface, which is a signaling interface between the nodes of the NG-RAN 1014 and an access and mobility management function (AMF) 1044 (e.g., N2 interface).

The NG-RAN 1014 may provide a 5G-NR air interface with the following characteristics: variable SCS; CP-OFDM for DL, CP-OFDM and DFT-s-OFDM (DFT-spread OFDM) for UL; polar, repetition, simplex, and Reed-Muller codes for control and low density parity check (LDPC) for data. The 5G-NR air interface may rely on CSI-RS, PDSCH/PDCCH DMRS similar to the LTE air interface. The 5G-NR air interface may not use a CRS, but may use PBCH DMRS for PBCH demodulation; phase tracking reference signal (PTRS) for phase tracking for PDSCH; and tracking reference signal for time tracking. The 5G-NR air interface may be operating on frequency range 1 (FR1) bands that include sub-6 GHz bands or frequency range 2 (FR2) bands that include bands from 24.25 GHz to 52.6 GHz. The 5G-NR air interface may include an SSB that is an area of a downlink resource grid that includes primary synchronization signal (PSS)/secondary synchronization signal (SSS)/PBCH.

In some embodiments, the 5G-NR air interface may utilize BWPs for various purposes. For example, bandwidth part (BWP) can be used for dynamic adaptation of the SCS. For example, the LTE 1002 can be configured with multiple BWPs where each BWP configuration has a different SCS. When a BWP change is indicated to the LTE 1002, the SCS of the transmission is changed as well. Another use case example of BWP is related to power saving. In particular, multiple BWPs can be configured for the LTE 1002 with different amount of frequency resources (for example, physical resource blocks (PRBs)) to support data transmission under different traffic loading scenarios. A BWP containing a smaller number of PRBs can be used for data transmission with small traffic load while allowing power saving at the LTE 1002 and in some cases at the gNB 1016. A BWP containing a larger number of PRBs can be used for scenarios with higher traffic load.

The RAN 1004 is communicatively coupled to CN 1020 that includes network elements to provide various functions to support data and telecommunications services to customers/subscribers (for example, users of LTE 1002). The components of the CN 1020 may be implemented in one physical node or separate physical nodes. In some embodiments, network functions virtualization (NFV) may be utilized to virtualize any or all of the functions provided by the network elements of the CN 1020 onto physical compute/storage resources in servers, switches, etc. A logical instantiation of the CN 1020 may be referred to as a network slice, and a logical instantiation of a portion of the CN 1020 may be referred to as a network sub-slice.

In some embodiments, the CN 1020 may be an LTE CN 1022, which may also be referred to as an evolved packet core (EPC). The LTE CN 1022 may include mobility management entity (MME) 1024, serving gateway (SGW) 1026, serving GPRS support node (SGSN) 1028, home subscriber server HSS 1030, packet data network (PDN) gateway (PGW) 1032, and policy control and charging rules function (PCRF) 1034 coupled with one another over interfaces (or "reference points") as shown. Functions of the elements of the LTE CN 1022 may be briefly introduced as follows.

The MME 1024 may implement mobility management functions to track a current location of the LTE 1002 to facilitate paging, bearer activation/deactivation, handovers, gateway selection, authentication, etc.

The SGW 1026 may terminate an S1 interface toward the RAN and route data packets between the RAN and the LTE CN 1022. The SGW 1026 may be a local mobility anchor point for inter-RAN node handovers and also may provide an anchor for inter-3GPP mobility. Other responsibilities may include lawful intercept, charging, and some policy enforcement.

The SGSN 1028 may track a location of the LTE 1002 and perform security functions and access control. In addition, the SGSN 1028 may perform inter-EPC node signaling for mobility between different radio access technology (RAT) networks; PDN and S-GW selection as specified by MME 1024; MME selection for handovers; etc. The S3 reference point between the MME 1024 and the SGSN 1028 may enable user and bearer information exchange for inter-3GPP access network mobility in idle/active states.

The HSS 1030 may include a database for network users, including subscription-related information to support the network entities' handling of communication sessions. The HSS 1030 can provide support for routing/roaming, authentication, authorization, naming/addressing resolution, location dependencies, etc. An S6a reference point between the HSS 1030 and the MME 1024 may enable transfer of subscription and authentication data for authenticating/authorizing user access to the LTE CN 1020.

The PGW 1032 may terminate an SGi interface toward a data network (DN) 1036 that may include an application/content server 1038. The PGW 1032 may route data packets between the LTE CN 1022 and the data network 1036. The PGW 1032 may be coupled with the SGW 1026 by an S5 reference point to facilitate user plane tunneling and tunnel management. The PGW 1032 may further include a node for policy enforcement and charging data collection (for example, PCEF). Additionally, the SGi reference point between the PGW 1032 and the data network 10 36 may be an operator external public, a private PDN, or an intra-operator packet data network, for example, for provision of IP multimedia subsystem (IMS) services. The PGW 1032 may be coupled with a PCRF 1034 via a Gx reference point.

The PCRF 1034 is the policy and charging control element of the LTE CN 1022. The PCRF 1034 may be communicatively coupled to the app/content server 1038 to determine appropriate quality of service (QoS) and charging parameters for service flows. The PCRF 1032 may provision associated rules into a policy and charging enforcement function (PCEF) (via Gx reference point) with appropriate traffic flow template (TFT) and QoS class of identifier (QCI).

In some embodiments, the CN 1020 may be a 5GC 1040. The 5GC 1040 may include an authentication server function (AUSF) 1042, AMF 1044, session management function (SMF) 1046, user plane function (UPF) 1048, network slice selection function (NSSF) 1050, network exposure function (NEF) 1052, network function (NF) repository function (NRF) 1054, policy control function (PCF) 1056, unified data management (UDM) 1058, and application function (AF) 1060 coupled with one another over interfaces (or "reference points") as shown. Functions of the elements of the 5G core network (5GC) 1040 may be briefly introduced as follows.

The AUSF 1042 may store data for authentication of LTE 1002 and handle authentication-related functionality. The AUSF 1042 may facilitate a common authentication framework for various access types. In addition to communicating with other elements of the 5GC 1040 over reference points as shown, the AUSF 1042 may exhibit an Nausf service-based interface.

The AMF 1044 may allow other functions of the 5GC 1040 to communicate with the LTE 1002 and the RAN 1004 and to subscribe to notifications about mobility events with respect to the LTE 1002. The AMF 1044 may be responsible for registration management (for example, for registering LTE 1002), connection management, reachability management, mobility management, lawful interception of AMF-related events, and access authentication and authorization. The AMF 1044 may provide transport for session management (SM) messages between the LTE 1002 and the SMF 1046, and act as a transparent proxy for routing SM messages. AMF 1044 may also provide transport for SMS messages between LTE 1002 and an SMS function (SMSF). AMF YX44 may interact with the AUSF 1042 and the LTE 1002 to perform various security anchor and context management functions. Furthermore, AMF 1044 may be a termination point of a RAN CP interface, which may include or be an N2 reference point between the RAN 1004 and the AMF 1044; and the AMF 1044 may be a termination point of non-access stratum (NAS) (N1) signaling, and perform NAS ciphering and integrity protection. AMF 1044 may also support NAS signaling with the LTE 1002 over an N3 interworking function (IWF) interface.

The SMF 1046 may be responsible for SM (for example, session establishment, tunnel management between UPF 1048 and AN 1008); LTE IP address allocation and management (including optional authorization); selection and control of UP function; configuring traffic steering at UPF 1048 to route traffic to proper destination; termination of interfaces toward policy control functions; controlling part of policy enforcement, charging, and QoS; lawful intercept (for SM events and interface to layer indicator (LI) system); termination of SM parts of NAS messages; downlink data notification; initiating AN specific SM information, sent via AMF 1044 over N2 to AN 1008; and determining session and service continuity (SSC) mode of a session. SM may refer to management of a PDU session, and a protocol data unit (PDU) session or "session" may refer to a PDU connectivity service that provides or enables the exchange of PDUs between the LTE 1002 and the data network 1036.

The UPF 1048 may act as an anchor point for intra-RAT and inter-RAT mobility, an external PDU session point of interconnect to data network 1036, and a branching point to support multi-homed PDU session. The UPF 1048 may also perform packet routing and forwarding, perform packet inspection, enforce the user plane part of policy rules, lawfully intercept packets (UP collection), perform traffic usage reporting, perform QoS handling for a user plane (e.g., packet filtering, gating, LTL/DL rate enforcement), perform uplink traffic verification (e.g., SDF-to-QoS flow mapping), transport level packet marking in the uplink and downlink, and perform downlink packet buffering and downlink data notification triggering. UPF 1048 may include an uplink classifier to support routing traffic flows to a data network.

The NSSF 1050 may select a set of network slice instances serving the UE 1002. The NSSF 1050 may also determine allowed network slice selection assistance information (NSSAI) and the mapping to the subscribed S-NSSAIs, if needed. The NSSF 1050 may also determine the AMF set to be used to serve the UE 1002, or a list of candidate AMFs based on a suitable configuration and possibly by querying the NRF 1054. The selection of a set of network slice instances for the LTE 1002 may be triggered by the AMF 1044 with which the LTE 1002 is registered by interacting with the NSSF 1050, which may lead to a change of AMF. The NSSF 1050 may interact with the AMF 1044 via an N22 reference point; and may communicate with another NSSF in a visited network via an N31 reference point (not shown). Additionally, the NSSF 1050 may exhibit an Nnssf service-based interface.

The NEF 1052 may securely expose services and capabilities provided by 3GPP network functions for third party, internal exposure/re-exposure, AFs (e.g., AF 1060), edge computing or fog computing systems, etc. In such embodiments, the NEF 1052 may authenticate, authorize, or throttle the AFs. NEF 1052 may also translate information exchanged with the AF 1060 and information exchanged with internal network functions. For example, the NEF 1052 may translate between an AF-Service-Identifier and an internal 5GC information. NEF 1052 may also receive information from other NFs based on exposed capabilities of other NFs. This information may be stored at the NEF 1052 as structured data, or at a data storage NF using standardized interfaces. The stored information can then be re-exposed by the NEF 1052 to other NFs and AFs, or used for other purposes such as analytics. Additionally, the NEF 1052 may exhibit an Nnef service-based interface.

The NRF 1054 may support service discovery functions, receive NF discovery requests from NF instances, and provide the information of the discovered NF instances to the NF instances. NRF 1054 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 1054 may exhibit the Nnrf service-based interface.

The PCF 1056 may provide policy rules to control plane functions to enforce them, and may also support unified policy framework to govern network behavior. The PCF 1056 may also implement a front end to access subscription information relevant for policy decisions in a UDR of the UDM 1058. In addition to communicating with functions over reference points as shown, the PCF 1056 exhibit an Npcf service-based interface.

The UDM 1058 may handle subscription-related information to support the network entities' handling of communication sessions, and may store subscription data of LTE 1002. For example, subscription data may be communicated via an N8 reference point between the UDM 1058 and the AMF 1044. The UDM 1058 may include two parts, an application front end and a UDR. The UDR may store subscription data and policy data for the UDM 1058 and the PCF 1056, and/or structured data for exposure and application data (including PFDs for application detection, application request information for multiple LTEs 1002) for the NEF 1052. The Nudr service-based interface may be exhibited by the UDR 221 to allow the UDM 1058, PCF 1056, and NEF 1052 to access a particular set of the stored data, as well as to read, update (e.g., add, modify), delete, and subscribe to notification of relevant data changes in the UDR. The UDM may include a UDM-front end (-FE), which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 1058 may exhibit the Nudm service-based interface.

The AF 1060 may provide application influence on traffic routing, provide access to NEF, and interact with the policy framework for policy control.

In some embodiments, the 5GC 1040 may enable edge computing by selecting operator/3rd party services to be geographically close to a point that the LTE 1002 is attached to the network. This may reduce latency and load on the network. To provide edge-computing implementations, the 5GC 1040 may select a UPF 1048 close to the LTE YX02 and execute traffic steering from the UPF 1048 to data network 1036 via the N6 interface. This may be based on the LTE subscription data, LTE location, and information provided by the AF 1060. In this way, the AF 1060 may influence UPF (re)selection and traffic routing. Based on operator deployment, when AF 1060 is considered to be a trusted entity, the network operator may permit AF 1060 to interact directly with relevant NFs. Additionally, the AF 1060 may exhibit an Naf service-based interface.

The data network 1036 may represent various network operator services, Internet access, or third party services that may be provided by one or more servers including, for example, application/content server 1038.

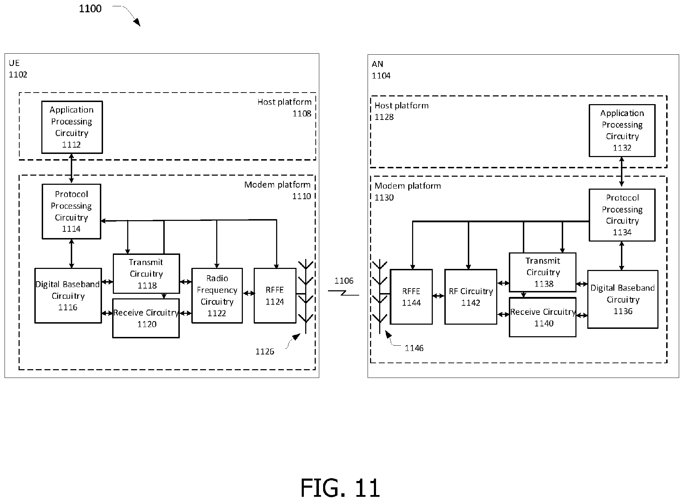

FIG. 11 schematically illustrates a wireless network 1100 in accordance with various embodiments. The wireless network 1100 may include a LTE 1102 in wireless communication with an AN 1104. The LTE 1102 and AN 1104 may be similar to, and substantially interchangeable with, like-named components described elsewhere herein.

The LTE 1102 may be communicatively coupled with the AN 1104 via connection 1106. The connection YY06 is illustrated as an air interface to enable communicative coupling, and can be consistent with cellular communications protocols such as an LTE protocol or a 5G NR protocol operating at mmWave or sub-6GHz frequencies.

The LTE 1102 may include a host platform 1108 coupled with a modem platform 1110. The host platform 1108 may include application processing circuitry 1112, which may be coupled with protocol processing circuitry 1114 of the modem platform 1110. The application processing circuitry 1112 may run various applications for the LTE 1102 that source/sink application data. The application processing circuitry 1112 may further implement one or more layer operations to transmit/receive application data to/from a data network. These layer operations may include transport (for example UDP) and Internet (for example, IP) operations

The protocol processing circuitry 1114 may implement one or more of layer operations to facilitate transmission or reception of data over the connection 1106. The layer operations implemented by the protocol processing circuitry 1114 may include, for example, MAC, RLC, PDCP, RRC and NAS operations.

The modem platform 1110 may further include digital baseband circuitry 1116 that may implement one or more layer operations that are "below" layer operations performed by the protocol processing circuitry 1114 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 1110 may further include transmit circuitry 1118, receive circuitry 1120, RF circuitry 1122, and RF front end (RFFE) 1124, which may include or connect to one or more antenna panels 1126. Briefly, the transmit circuitry 1118 may include a digital-to-analog converter, mixer, intermediate frequency (IF) components, etc.; the receive circuitry 1120 may include an analog-to-digital converter, mixer, IF components, etc.; the RF circuitry 1122 may include a low-noise amplifier, a power amplifier, power tracking components, etc.; RFFE 1124 may include filters (for example, surface/bulk acoustic wave filters), switches, antenna tuners, beamforming components (for example, phase-array antenna components), etc. The selection and arrangement of the components of the transmit circuitry 1118, receive circuitry 1120, RF circuitry 1122, RFFE 1124, and antenna panels 1126 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 1114 may include one or more instances of control circuitry (not shown) to provide control functions for the transmit/receive components.

A LTE reception may be established by and via the antenna panels 1126, RFFE 1124, RF circuitry 1122, receive circuitry 1120, digital baseband circuitry 1116, and protocol processing circuitry 1114. In some embodiments, the antenna panels 1126 may receive a transmission from the AN 1104 by receive-beamforming signals received by a plurality of antennas/antenna elements of the one or more antenna panels 1126.

A UE transmission may be established by and via the protocol processing circuitry 1114, digital baseband circuitry 1116, transmit circuitry 1118, RF circuitry 1122, RFFE 1124, and antenna panels 1126. In some embodiments, the transmit components of the LTE 1104 may apply a spatial filter to the data to be transmitted to form a transmit beam emitted by the antenna elements of the antenna panels 1126.

Similar to the LTE 1102, the AN 1104 may include a host platform 1128 coupled with a modem platform 1130. The host platform 1128 may include application processing circuitry 1132 coupled with protocol processing circuitry 1134 of the modem platform 1130. The modem platform may further include digital baseband circuitry 1136, transmit circuitry 1138, receive circuitry 1140, RF circuitry 1142, RFFE circuitry 1144, and antenna panels 1146. The components of the AN 1104 may be similar to and substantially interchangeable with like-named components of the LTE 1102. In addition to performing data transmission/reception as described above, the components of the AN 1108 may perform various logical functions that include, for example, RNC functions such as radio bearer management, uplink and downlink dynamic radio resource management, and data packet scheduling.

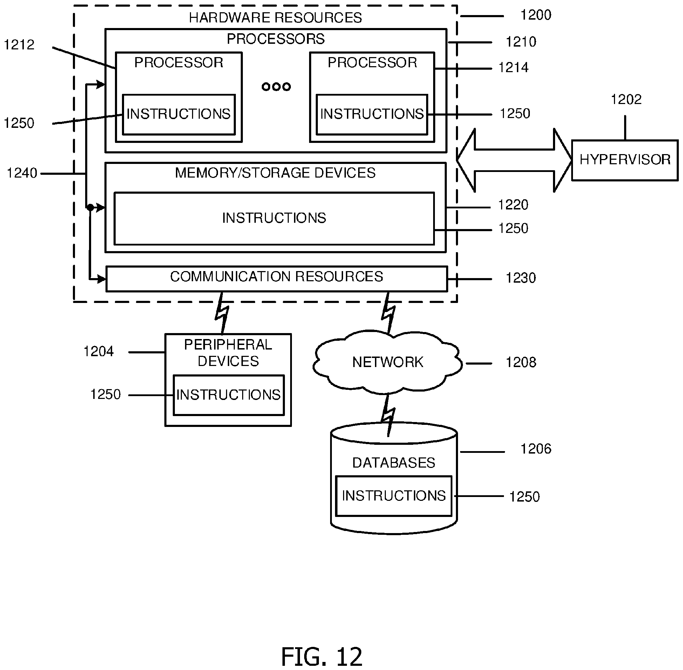

FIG. 12 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 12 shows a diagrammatic representation of hardware resources 1200 including one or more processors (or processor cores) 1210, one or more memory/storage devices 1220, and one or more communication resources 1230, each of which may be communicatively coupled via a bus 1240 or other interface circuitry. For embodiments where node virtualization (e.g., NFV) is utilized, a hypervisor 1202 may be executed to provide an execution environment for one or more network slices/sub-slices to utilize the hardware resources 1200.

The processors 1210 may include, for example, a processor 1212 and a processor 1214. The processors 1210 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1220 may include main memory, disk storage, or any suitable combination thereof. The memory/storage devices 1220 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1230 may include interconnection or network interface controllers, components, or other suitable devices to communicate with one or more peripheral devices 1204 or one or more databases 1206 or other network elements via a network 1208. For example, the communication resources 1230 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 1250 may comprise software, a program, an application, an applet, an app, or other executable code for causing at least any of the processors 1210 to perform any one or more of the methodologies discussed herein. The instructions 1250 may reside, completely or partially, within at least one of the processors 1210 (e.g., within the processor's cache memory), the memory/storage devices 1220, or any suitable combination thereof. Furthermore, any portion of the instructions 1250 may be transferred to the hardware resources 1200 from any combination of the peripheral devices 1204 or the databases 1206. Accordingly, the memory of processors 1210, the memory/storage devices 1220, the peripheral devices 1204, and the databases 1206 are examples of computer-readable and machine-readable media.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a LTE, base station, network element, etc. as described above in connection with one or more of the preceding figures may be configured to operate in accordance with one or more of the examples set forth below in the example section.

### EXAMPLES

Example 1 may include a method of wireless communication for the switching of PDCCH monitoring configurations, the method comprising: receiving, by a UE, the high layer configuration on the two groups of search space (SS) sets; and decoding, by the LTE, a DCI from physical downlink control channel (PDCCH) using a PDCCH monitoring capability.

Example 2 may include the method of example 1 or some other example herein, wherein if a span for the second group of SS sets is configured in a slot in the slot group, the total number of spans in the slot is limited to 2.

Example 3 may include the method of example 1 or some other example herein, wherein the second group of SS sets is configured in at most A spans of n consecutive symbols in a slot group, where A is constant value.

Example 4 may include the method of example 1 or some other example herein, wherein if a span for the second group of SS sets is not monitored by LTE in a slot group, the span is not counted in the total number of monitored spans in a slot group.

Example 5 may include the method of example 1 or some other example herein, wherein different kinds of SS sets are configured in the same span.

Example 6 may include the method of example 1 or some other example herein, wherein gNB ensures the total number of spans in any slot group does not exceed the maximum number.

Example 7 may include the method of example 1 or some other example herein, wherein if the total number of spans in a slot group of X slots for a LTE exceed a maximum number k, one or more spans in the slot group are dropped.

Example 8 may include the method of example 7 or some other example herein, herein a span with USS sets only in the slot group is dropped.

Example 9 may include the method of example 7 or some other example herein, wherein one or more spans of the first group of SS sets in the slot group is dropped.

Example 10 may include the method of example 9 or some other example herein, wherein if the remaining number of spans still exceed the maximum number, one or more spans with the second group of SS sets except the SS set with searchSpaceId = 0 are dropped.

Example 11 may include the method of example 9 or some other example herein, wherein if the remaining number of spans still exceed the maximum number, the span of the SS set with searchSpaceId = 0 is dropped.

Example 12 may include the method of examples 7-11 or some other example herein, wherein a span in a consecutive slot from a slot containing another span is dropped firstly.

Example 13 may include the method of example 1 or some other example herein, wherein separate maximum numbers of spans for combination (X, Y) with Y=1 and Y>1.

Example 14 may include a method of a LTE, the method comprising: receiving a first PDCCH monitoring configuration for a first group of search space (SS) sets and a second PDCCH monitoring configuration for a second group of SS sets; and monitoring for a physical downlink control channel (PDCCH) based on at least one of the first or second PDCCH monitoring configuration.

Example 15 may include the method of example 14 or some other example herein, further comprising decoding a DCI from the PDCCH received in one or more monitoring occasions.

Example 16 may include the method of example 14-15 or some other example herein, wherein the monitoring is performed further based on a PDCCH monitoring capability of the UE.

Example 17 may include the method of example 14-16 or some other example herein, wherein if a span for the second group of SS sets is configured in a slot in a slot group, the total number of spans in the slot is limited to 2.

Example 18 may include the method of example 14-17 or some other example herein, wherein the second group of SS sets is configured in at most A spans of n consecutive symbols in a slot group.

Example Z01 may include an apparatus comprising means to perform one or more elements of a method described in or related to any of examples 1-18, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-18, or any other method or process described herein.

Example Z03 may include an apparatus comprising logic, modules, or circuitry to perform one or more elements of a method described in or related to any of examples 1-18, or any other method or process described herein.

Example Z04 may include a method, technique, or process as described in or related to any of examples 1-18, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-18, or portions thereof.

Example Z06 may include a signal as described in or related to any of examples 1-18, or portions or parts thereof.

Example Z07 may include a datagram, packet, frame, segment, protocol data unit (PDU), or message as described in or related to any of examples 1-18, or portions or parts thereof, or otherwise described in the present disclosure.

Example Z08 may include a signal encoded with data as described in or related to any of examples 1-18, or portions or parts thereof, or otherwise described in the present disclosure.

Example Z09 may include a signal encoded with a datagram, packet, frame, segment, protocol data unit (PDU), or message as described in or related to any of examples 1-18, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-18, or portions thereof.

Example Z11 may include a computer program comprising instructions, wherein execution of the program by a processing element is to cause the processing element to carry out the method, techniques, or process as described in or related to any of examples 1-18, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations:

Unless used differently herein, terms, definitions, and abbreviations may be consistent with terms, definitions, and abbreviations defined in 3GPP TR 21.905 v16.0.0 (2019-06). For the purposes of the present document, the defined abbreviations may apply to the examples and embodiments discussed herein.

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "LTE" as used herein refers to a device with radio communication capabilities and may describe a remote user of network resources in a communications network. The term "user equipment" or "LTE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "LTE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by SSB-MeasurementTimingConfiguration.

The term "SSB" refers to an SS/PBCH block.

The term "a "Primary Cell" refers to the MCG cell, operating on the primary frequency, in which the LTE either performs the initial connection establishment procedure or initiates the connection re-establishment procedure.

The term "Primary SCG Cell" refers to the SCG cell in which the LTE performs random access when performing the Reconfiguration with Sync procedure for DC operation.

The term "Secondary Cell" refers to a cell providing additional radio resources on top of a Special Cell for a LTE configured with CA.

The term "Secondary Cell Group" refers to the subset of serving cells comprising the PSCell and zero or more secondary cells for a LTE configured with DC.

The term "Serving Cell" refers to the primary cell for a LTE in RRC_CONNECTED not configured with CA/DC there is only one serving cell comprising of the primary cell.

The term "serving cell" or "serving cells" refers to the set of cells comprising the Special Cell(s) and all secondary cells for a LTE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus of a New Radio (NR) User Equipment (LTE), the apparatus including:
a radio frequency (RF) interface; and
one or more processors coupled to the RF interface and configured to:
receive a high layer configuration on a plurality of search space (SS) sets;
configure timing for a physical downlink control channel (PDCCH) monitoring according to the plurality of SS sets;
decode a downlink control information (DCI) from PDCCH using the PDCCH monitoring.

2. The apparatus of claim 1,
wherein the PDCCH monitoring for a first SS set of the plurality of SS sets comprises monitoring the PDCCH within one or more slots of a slot group comprising a plurality of slots, each slot comprising a plurality of symbols, or monitoring the PDCCH within one or more first spans of the slot group, each span comprising a number of consecutive symbols.

3. The apparatus of claim 2,
wherein the PDCCH monitoring for a second SS set of the plurality of SS sets comprises monitoring one or more second spans of the slot group.

4. The apparatus of claim 3,
wherein the second SS set is configured with a searchSpaceId=0 and one or more monitoring occasions of the second SS set are based on associated synchronization signal/physical broadcast channel block.

5. The apparatus of claim 3,
wherein the second SS set is configured with a non-zero searchSpaceId and one or more monitoring occasions of the second SS set are configured by high layer signaling.

6. The apparatus of any one of claims 3 to 5,
wherein the second SS set comprises a plurality of second SS sets.

7. The apparatus of any one of claims 3 to 6,
wherein the second SS set comprises a Type1 common search space (CSS) without dedicated radio resource control configuration,
wherein the PDCCH monitoring comprises monitoring the PDCCH up to one span of a slot of the slot group.

8. The apparatus of any one of claims 3 to 7,
wherein the second SS set comprises a TypeOA or Type2 CSS set,
wherein the PDCCH monitoring comprises monitoring the PDCCH for a number of spans in the slot group.

9. The apparatus of claim 8,
wherein the one or more processors are configured to selectively monitor the PDCCH, when the TypeOA or Type2 CSS set is configured with a non-zero searchSpaceId.

10. The apparatus of any one of claims 3 to 9,
wherein the second SS set is configured in at most one span within the slot group, except an SS set of the second group of SS sets with searchSpaceId=0.

11. The apparatus of any one of claims 3 to 10,
wherein the second SS set comprises one or multiple CSSs configured in the slot group, the one or multiple CSS with a type of at least one of a Type1 CSS without dedicated RRC configuration, a TypeO CSS, a TypeOA CSS, or a Type2 CSS,
wherein the PDCCH monitoring comprises monitoring the PDCCH for at most M number of spans of one CSS type of the CSS types.

12. The apparatus of claim 11,
wherein the number of M is predefined or configured by a higher layer signaling, and the M is 1.

13. The apparatus of any one of claims 1 to 12,
wherein the one or more processors are configured to cause the RF interface to operate with a carrier frequency above 52.6 GHz.

14. A non-transitory computer-readable medium comprising instructions to cause a New Radio (NR) user equipment (LTE), upon execution of the instructions by one or more processors of the NR LTE, to:
receive a high layer configuration on a plurality of search space (SS) sets;
configure timing for a physical downlink control channel (PDCCH) monitoring according to the plurality of SS sets;
decode a downlink control information (DCI) from PDCCH using the PDCCH monitoring.

15. The non-transitory computer-readable medium of claim 14,
wherein the PDCCH monitoring for a first SS set of the plurality of SS sets comprises monitoring the PDCCH within one or more slots of a slot group comprising a plurality of slots, each slot comprising a plurality of symbols, or monitoring the PDCCH within one or more first spans of the slot group, each span comprising a number of consecutive symbols.
